(19) Europäisches Patentamt
European Patent Office
Office européen des brevets

(11) EP 1 754 728 B1

(12) **EUROPEAN PATENT SPECIFICATION**

(45) Date of publication and mention of the grant of the patent:
**24.02.2010 Bulletin 2010/08**

(51) Int Cl.:
***C08F 230/08*** *(2006.01)* ***C08F 290/06*** *(2006.01)*
***G02B 1/04*** *(2006.01)*

(21) Application number: **06076274.7**

(22) Date of filing: **11.09.2000**

(54) **Soft contact lenses**

Weiche Kontaktlinsen

Lentilles de contact souples

(84) Designated Contracting States:
**DE FR GB IE IT**

(30) Priority: **07.10.1999 US 414365**
**22.03.2000 US 532943**
**30.08.2000 US 652817**

(43) Date of publication of application:
**21.02.2007 Bulletin 2007/08**

(62) Document number(s) of the earlier application(s) in accordance with Art. 76 EPC:
**00961768.9 / 1 235 866**

(73) Proprietor: **Johnson & Johnson Vision Care Inc.**
**Jacksonville, FL 32223 (US)**

(72) Inventors:
- **Vanderlaan, Douglas G.**
  **Jacksonville, FL 32206 (US)**
- **Turner, David C.**
  **Jacksonville, FL 32223 (US)**
- **Hargiss, Marcie V.**
  **Jacksonville, FL 32258 (US)**
- **Maiden, Annie C.**
  **Jacksonville, FL 32221 (US)**
- **Love, Robert N.**
  **Jacksonville, FL 32216 (US)**
- **Ford, James D.**
  **Orange Park, FL 32073 (US)**
- **Molock, Frank F.**
  **Orange Park, FL 32073 (US)**
- **Steffen, Robert B.**
  **Jacksonville Beach, FL 32250 (US)**
- **Hill, Gregory A.**
  **Atlantic Beach, FL 32233 (US)**
- **Alli, Azaam**
  **Jacksonville, FL 32277 (US)**
- **Enns, John B.**
  **Jacksonville, FL 32257 (US)**
- **Mccabe, Kevin P.**
  **Jacksonville, FL 32256 (US)**

(74) Representative: **Fisher, Adrian John et al**
**Carpmaels & Ransford**
**43-45 Bloomsbury Square**
**London WC1A 2RA (GB)**

(56) References cited:
**EP-A- 0 940 693** **WO-A-96/31792**
**US-A- 3 808 178** **US-A- 5 358 995**
**US-A- 5 959 117**

- **LAI Y -C: "ROLE OF BULKY POLYSILOXANYLALKYL METHACRYLATES IN OXYGEN-PERMEABLE HYDROGEL MATERIALS" JOURNAL OF APPLIED POLYMER SCIENCE,US,JOHN WILEY AND SONS INC. NEW YORK, vol. 56, no. 3, 18 April 1995 (1995-04-18), pages 317-324, XP000516433 ISSN: 0021-8995**
- **KUNZLER J F: "Silicone Hydrogels for Contact Lens Application" TRENDS IN POLYMER SCIENCE,NL,ELSEVIER SCIENCE PUBLISHERS B.V. AMSTERDAM, vol. 4, no. 2, 1 February 1996 (1996-02-01), pages 52-59, XP004049314 ISSN: 0966-4793**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Field of the Invention

This invention relates to silicone hydrogels. In particular, the invention relates to silicone hydrogels formed by curing a reaction mixture of silicone-containing monomers.

Background of the Invention

A hydrogel is a hydrated crosslinked polymeric system that contains water in an equilibrium state. Hydrogels typically are oxygen permeable and biocompatible, making them preferred materials for producing biomedical devices and in particular contact or intraocular lenses.

Conventional hydrogels are prepared from monomeric mixtures predominantly containing hydrophilic monomers, such as 2-hydroxyethyl methacrylate ("HEMA") or N-vinyl pyrrolidone ("NVP"). United States Patents Nos. 4,495,313, 4,889,664 and 5,039,459 disclose the formation of conventional hydrogels. The oxygen permeability of these conventional hydrogel materials relates to the water content of the materials, and is typically below 20-30 barrers. For contact lenses made of the conventional hydrogel materials, that level of oxygen permeability is suitable for short-term wear of the contact lenses; however, that level of oxygen permeability may be insufficient to maintain a healthy cornea during long-term wear of contact lenses (e.g., 30 days without removal). Therefore, efforts have been made and continue to be made to increase the oxygen permeability of conventional hydrogels.

One known way to increase the oxygen permeability of hydrogels is to add silicone-containing monomers to the hydrogel formulations to produce silicone hydrogels. Silicone-containing polymers generally have higher oxygen permeabilities than conventional hydrogels. Silicone hydrogels have been prepared by polymerizing mixtures containing at least one silicone-containing monomer and at least one hydrophilic monomer. Either the silicone-containing monomer or the hydrophilic monomer may function as a crosslinking agent (a crosslinking agent is a monomer having multiple polymerizable functionalities) or a separate crosslinking agent may be employed. The formation of silicone hydrogels has been disclosed in U.S. Patents Nos. 4,954,587, 5,010,141, 5,079,319, 5,115,056, 5,260,000, 5,336,797, 5,358,995, 5,387,632, 5,451,617, 5,486,579 and WO 96/31792. Group Transfer Polymerization techniques for polymerizing acrylic and methacrylic monomers with terminal silyl containing monomers is described in various patents including U.S. Patents Nos. 4,414,372, 4,417,034, 4,508,880, 4,524,196, 4,581,428, 4,588,795, 4,598,161, 4,605,716, 4,622,372, 4,656,233, 4,659,782, 4,659,783, 4,681,918, 4,695,607, 4,711,942, 4,771,116, 5,019,634 and 5,021,524

U.S. Patent No. 3,808,178 discloses the formation of copolymers of small silicone-containing monomers and various hydrophilic monomers. U.S. Patent No. 5,034,461 describes silicone hydrogels prepared from various combinations of silicone-polyurethane macromers and hydrophilic monomers such as HEMA or N,N-dimethyacrylamide ("DMA"). The addition of methacryloxypropyltris-(trimethylsiloxy)silane ("TRIS") reduced the modulus of such hydrogels, but in many examples the modulus was still higher than may be desired.

U.S. Patents Nos. 5,358,995 and 5,387,632 describe hydrogels made from various combinations of silicone macromers, TRIS, NVP and DMA. Replacing a substantial portion of the silicone macromer with TRIS reduced the modulus of the resulting hydrogels. Two publications from the same author, "The Role of Bulky Polysiloxanylalkyl Methacrylates in Polyurethane-Polysiloxane Hydrogels", J. Appl. Poly. Sci., Vol. 60, 1193-1199 (1996), and "The Role of Bulky Polysiloxanylalkyl Methacrylates in Oxygen-Permeable Hydrogel Materials", J. Appl. Poly. Sci., Vol. 56, 317-324 (1995) also describe experimental results indicating that the modulus of hydrogels made from reaction mixtures of silicone-macromers and hydrophilic monomers such as DMA decreases with added TRIS.

The use of methacryloxypropylbis(trimethylsiloxy)methylsilane ("MBM") to make hard contact lenses was described in WO 9110155 and in JP 61123609.

When relatively high levels of bulky silicone-containing monomers such as TRIS are incorporated into the hydrogels made from silicone-containing macromers and hydrophilic monomers, the elasticity, or the speed at which the polymer returns to its original shape after stress can be reduced to an extent that is unacceptable to the contact lens wearer.

There still remains a need in the art for silicone hydrogels that are soft enough to make soft contact lenses, which possess high oxygen permeability, suitable water content, and sufficient elasticity, and are comfortable to the contact lens wearer.

Summary of the Invention

This invention provides a silicone hydrogel contact lens according to claim 1. Also described herein is a silicone hydrogel prepared by curing a reaction mixture comprising either or both of the silicone-containing monomers of Structure I and II. Structure I has the following structure:

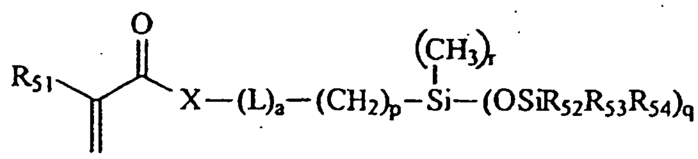

wherein $R_{51}$ is H or $CH_3$, q is l or 2 and for each q, $R_{52}$, $R_{53}$ and $R_{54}$ are independently an alkyl or an aromatic, preferably ethyl, methyl, benzyl, phenyl, or a monovalent siloxane chain comprising from 1 to 100 repeating Si-O units, p its 1 to 10, r = (3-q), X is O or $NR_{55}$, where $R_{55}$ is H or a monovalent alkyl group with 1 to 4 carbons, a is 0 or 1, and L is a divalent linking group which preferably comprises from 2 to 5 carbons, which may also optionally comprise ether or hydroxyl groups, for example, a polyethylene glycol chain.

Structure II has the following structure:

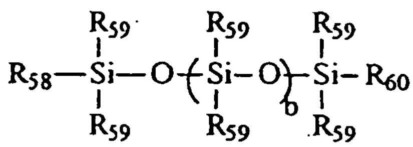

where b = 0 to 100, preferably 8 to 10; $R_{58}$ is a monovalent group containing an ethylenically unsaturated moiety, preferably a monovalent group containing a styryl, vinyl, or methacrylate moiety, more preferably a methacrylate moiety; each $R_{59}$ is independently a monovalent alkyl, or aryl group, which may be further substituted with alcohol, amine, ketone, carboxylic acid or ether groups, preferably unsubstituted monovalent alkyl or aryl groups, more preferably methyl; and $R_{60}$ is a monovalent alkyl, or aryl group, which may be further substituted with alcohol, amine, ketone, carboxylic acid or ether groups, preferably unsubstituted monovalent alkyl or aryl groups, preferably a $C_{1-10}$ aliphatic or aromatic group which may include hetero atoms, more preferably $C_{3-8}$ alkyl groups, most preferably butyl, particularly sec-butyl group.

In the preferred form, the silicone hydrogel comprises monomers of both Structure 1 and II. More preferably, the silicone hydrogel comprises silicone-containing monomer of Structure I and II and a hydrophilic monomer.

The use of the silicone-containing monomers of either or both Structure I and Structure II in a silicone hydrogel reduces the Young's modulus of the hydrogel especially in hydrogels which comprise these silicone-containing monomers and additional silicone-containing monomers which act as crosslinkers. The monomers of Structure I and II are more effective at lowering the modulus of the silicone hydrogel than for monomers described in the prior art. Additionally, the tan (delta) of the silicone hydrogels described herein may be concurrently preserved. It seems likely that this effect is because the siloxane group is less bulky than that of silicone-containing monomers used in the prior art, such as TRIS.

The polymers produced as described herein can be used to produce soft contact lenses that will provide high oxygen permeability, good elasticity, and can be produced economically and efficiently. The polymer described herein can be used to make biomedical devices which require biocompatability and high oxygen permeability, preferably contact lenses.

Detailed Description of the Invention and Preferred Embodiments

The term "monomer" used herein refers to low molecular weight compounds (i.e. typically having number average molecular weights less than 700) that can be polymerized, and to medium to high molecular weight compounds or polymers, sometimes referred to as macromonomers, (i.e. typically having number average molecular weights greater than 700) containing functional groups capable of further polymerization. Thus, it is understood that the terms "silicone-containing monomers" and "hydrophilic monomers" include monomers, macromonomers and prepolymers. Prepolymers are partially polymerized monomers or monomers which are capable of further polymerization.

A "silicone-containing monomer" is one that contains at least two [-Si-O-] repeating units in a monomer, macromer or prepolymer. Preferably, the total Si and attached O are present in the silicone-containing monomer in an amount greater than 20 weight percent, and more preferably greater than 30 weight percent of the total molecular weight of the silicone-containing monomer.

Examples of the silicone-containing monomers of Structure I that can be used to form silicone hydrogels as described herein are, without limitation, methacryloxypropylbis(trimethylsiloxy)methylsilane, methacryloxypropylpentamethyldisiloxane, and (3-methacryloxy-2-hydroxypropyloxy) propylbis(trimethylsiloxy)methylsilane. While such silicone monomers may additionally be used, linear mono-alkyl terminated polydimethylsiloxanes ("mPDMS") such as those shown in the following Structure II must be used:

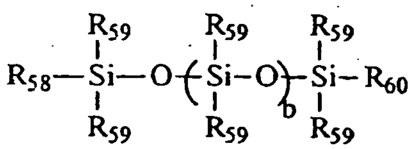

where b = 0 to 100, preferably 8 to 10; $R_{58}$ is a monovalent group containing a ethylenically unsaturated moiety, preferably a monovalent group containing a styryl, vinyl, or methacrylate moiety, more preferably a methacrylate moiety; each $R_{59}$ is independently a monovalent alkyl, or aryl group, which may be further substituted with alcohol, amine, ketone, carboxylic acid or ether groups, preferably unsubstituted monovalent alkyl or aryl groups, more preferably methyl; and $R_{60}$ is a monovalent alkyl, or aryl group, which may be further substituted with alcohol, amine, ketone, carboxylic acid or ether groups, preferably unsubstituted monovalent alkyl or aryl groups, preferably a $C_{1-10}$ aliphatic or aromatic group which may include hetero atoms, more preferably $C_{3-8}$ alkyl groups, most preferably butyl, particularly sec-butyl group.

The amount of mPDMS comprising the hydrogel is closely related to the modulus and tan (delta) of the hydrogels made according to this invention. Tan (delta) is defined as the loss modulus of the material divided by its elastic modulus (G"/G'). It is desirable to lower both the modulus and tan (delta) in silicone hydrogel lenses for a number of reasons. First, lower modulus and tan (delta) are manifested as less stiff and after stress quickly return to their original shape. This improves comfort over traditional silicone hydrogel lenses and makes them more aesthetically appealing given their ability to retain their round shape. Further, the incidence of superior epithelial arcurate lesions ("SEALs") is either or both lessened and eliminated by using lenses made from a polymer having a sufficiently low modulus and tan (delta). Thus, replacing lenses made from high modulus, high tan (delta) polymers with those of the instant invention is a means for reducing or eliminating the occurrence of SEALs. This is particularly the case for contact lens wearers that are prone to SEALs.

Desirably, the silicone hydrogels described herein comprise between about 2 and 70%wt mPDMS based on total weight of reactive monomer components from which the polymer is made. Depending upon the other monomers present, this will generally reduce the modulus of the polymer to between about 137.9 and 1241k Pa (20 and 180 psi) and a tan (delta) of less than about 0.1 to no more than about 0.3 (measured at a frequency of 1 Hz and a temperature of 25°C, according to the method described in Example 21). Silicone hydrogels described herein and comprising between about 4 and 50 %wt mPDMS (same basis as above) are preferred. These will generally exhibit a modulus between about 206.8 and 1103 kPa (30 and 160 psi) and a tan (delta) of less than about 0.25 (measured at a frequency of 1 Hz and a temperature of 25°C). Silicone hydrogels described herein and comprising between about 8 and 40 %wt mPDMS (same basis as above) are most preferred. These hydrogels will generally exhibit a modulus between about 275.8 and 896.3 kPa (40 and 130 psi) and a tan (delta) of about 0.2 or less (measured at a frequency of 1 Hz and a temperature of 25°C). Hydrogels having tan (delta) less than about 0.1 can also be made as described more fully below.

Additional silicone-containing monomers may be combined with the silicone-containing monomers of Stuctures I and II to form the soft contact lenses of the invention. Any known silicone-containing monomers useful for making silicone hydrogels can be used in combination with the silicone-containing monomer of Structure I and II to form the soft contact lenses of this invention. Many silicone-containing monomers useful for this purpose are disclosed in U.S. Patent No. 6,020,445 . Useful additional silicone-containing monomers combined with the silicone-containing monomers of Structure I to form the silicone hydrogels described herein are the hydroxyalkylamine-functional silicone-containing monomers disclosed in U.S. Patent No. 5,962,548 . The preferred silicone-containing linear or branched hydroxyalkylamine-functional monomers comprising a block or random monomer of the following structure:

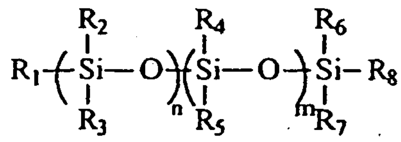

Structure III

wherein:

n is 0 to 500 and m is 0 to 500 and (n + m) = 10 to 500 and more preferably 20 to 250; $R_2$, $R_4$, $R_5$, $R_6$ and $R_7$ are independently a monovalent alkyl, or aryl group, which may be further substituted with alcohol, ester, amine, ketone, carboxylic acid or ether groups, preferably unsubstituted monovalent alkyl or aryl groups; and $R_1$, $R_3$ and $R_8$ are independently a monovalent alkyl, or aryl group, which may be further substituted with an alcohol, ester, amine, ketone, carboxylic acid or ether group, preferably unsubstituted monovalent alkyl or aryl groups, or are the following nitrogen-containing structure:

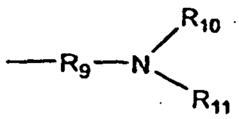

Structure IV

with the proviso that at least one of $R_1$, $R_3$, and $R_8$ are according to Structure IV, wherein $R_9$ is a divalent alkyl group such as $-(CH_2)_s-$ where s is from 1 to 10, preferably 3 to 6 and most preferably 3;

$R_{10}$ and $R_{11}$ are independently H, a monovalent alkyl or aryl group which may be further substituted with an alcohol, ester, amine, ketone, carboxylic acid or ether group, or has the following structure:

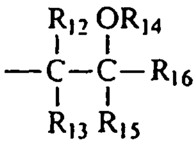

Structure V

where $R_{14}$ , is H, or a monovalent polymerizable group comprising acryloyl, methacryloyl, styryl, vinyl, allyl or N-vinyl lactam, preferably H or methacryloyl; $R_{16}$ is either H, a monovalent alkyl or aryl group which can be further substituted with alcohol, ester, amine, ketone, carboxylic acid or ether groups, or a polymerizable group comprising acrylate, methacrylate, styryl, vinyl, allyl or N-vinyl lactam, preferably alkyl substituted with an alcohol or methacrylate; $R_{12}$, $R_{13}$ and $R_{15}$ are independently H, a monovalent alkyl or aryl, which can be further substituted with alcohol, ester, amine, ketone, carboxylic acid or ether groups, or $R_{12}$ and $R_{15}$, or $R_{15}$ and $R_{13}$ can be bonded together to form a ring structure, with the proviso that at least some of the Structure IV groups on the monomer comprises polymerizable groups. $R_{12}$, $R_{13}$ and $R_{15}$ are preferably H.

Alternatively, the silicone hydrogels, described herein comprising the silicone-containing monomers of either or both Structure I and Structure II may further comprise hydrophilic monomers. The hydrophilic monomers optionally used to make the hydrogel polymer of this invention can be any of the known hydrophilic monomers disclosed in the prior art to make hydrogels.

The preferred hydrophilic monomers used to make the polymer described herein may be either acrylic- or vinyl-containing. Such hydrophilic monomers may themselves be used as crosslinking agents. The term "vinyl-type" or "vinyl-containing" monomers refer to monomers containing the vinyl grouping ($-CH=CH_2$) and are generally highly reactive. Such hydrophilic vinyl-containing monomers are known to polymerize relatively easily.

"Acrylic-type" or "acrylic-containing" monomers are those monomers containing the acrylic group: ($CH_2$=CRCOX) wherein R is H or $CH_3$, and X is O or N, which are also known to polymerize readily, such as N,N-dimethyl acrylamide (DMA), 2-hydroxyethyl methacrylate (HEMA), glycerol methacrylate, 2-hydroxyethyl methacrylamide, polyethyleneglycol monomethacrylate, methacrylic acid and acrylic acid.

Hydrophilic vinyl-containing monomers which may be incorporated into the silicone hydrogels described herein include monomers such as N-vinyl lactams (e.g. NVP), N-vinyl-N-methyl acetamide, N-vinyl-N-ethyl acetamide, N-vinyl-N-ethyl formamide, N-vinyl formamide, with NVP being preferred.

Other hydrophilic monomers that can be employed include polyoxyethylene polyols having one or more of the terminal hydroxyl groups replaced with a functional group containing a polymerizable double bond. Examples include polyethylene glycol, ethoxylated alkyl glucoside, and ethoxylated bisphenol A reacted with one or more molar equivalents of an end-capping group such as isocyanatoethyl methacrylate ("IEM"), methacrylic anhydride, methacryloyl chloride, vinylbenzoyl chloride, or the like, to produce a polyethylene polyol having one or more terminal polymerizable olefinic groups bonded to the polyethylene polyol through linking moieties such as carbamate or ester groups.

Still further examples are the hydrophilic vinyl carbonate or vinyl carbamate monomers disclosed in U.S. Patents No. 5,070,215, and the hydrophilic oxazolone monomers disclosed in U.S. Patents No. 4,910,277. Other suitable hydrophilic monomers will be apparent to one skilled in the art.

More preferred hydrophilic monomers which may be incorporated into the polymer described herein include hydrophilic monomers such as DMA, HEMA, glycerol methacrylate, 2-hydroxyethyl methacrylamide, NVP, polyethyleneglycol monomethacrylate, methacrylic acid and acrylic acid with DMA being the most preferred.

Other monomers that can be present in the reaction mixture used to form the silicone hydrogel described herein include ultra-violet absorbing monomers, reactive tints and the like. Additional processing aids such as release agents or wetting agents can also be added to the reaction mixture.

A polymerization catalyst is preferably included in the reaction mixture. The polymerization catalyst can be a compound such as lauroyl peroxide, benzoyl peroxide, isopropyl percarbonate, azobisisobutyronitrile, or the like, that generates free radicals at moderately elevated temperatures, or the polymerization catalyst can be a photoinitiator system such as an aromatic alpha-hydroxy ketone or a tertiary amine plus a diketone. Illustrative examples of photoinitiator systems are 2-hydroxy-2-methyl-1-phenyl-propan-1-one, and a combination of camphorquinone and ethyl 4-(N,N-dimethylamino)benzoate. The catalyst is used in the reaction mixture in catalytically effective amounts, e.g., from about 0.1 to about 2 parts by weight per 100 parts of reactive monomer. Polymerization of the reaction mixture can be initiated using the appropriate choice of heat or visible or ultraviolet light or other means depending on the polymerization initiator used. The preferred initiator is a 1:1 blend of 1-hydroxycyclohexyl phenyl ketone and bis(2, 6-dimethoxybenzoyl)-2, 4, 4-trimethylpentyl phosphine oxide and the preferred method of polymerization initiation is UV light.

Typically after curing of the reaction mixture of the silicone-containing monomers of either or both Structure I and II and optional hydrophilic monomers and any other optional ingredients such as additional silicone-containing monomers, diluents, crosslinking agents, catalysts, release agents, tints etc. which are blended together prior to polymerization, the resulting polymer is treated with a solvent to remove the diluent (if used) or any traces of unreacted components, and hydrate the polymer to form the hydrogel. The solvent used may be water (or an aqueous solution such as physiological saline), or depending on the solubility characteristics of the diluent (if used) used to make the hydrogel described herein and the solubility characteristics of any residual unpolymerized monomers, the solvent initially used can be an organic liquid such as ethanol, methanol, isopropanol, mixtures thereof, or the like, or a mixture of one or more such organic liquids with water, followed by extraction with pure water (or physiological saline) to produce the silicone hydrogel comprising a polymer of said monomers swollen with water. The silicone hydrogels after hydration of the polymers preferably comprise about 2 to 50 weight percent water, more preferably about 15 to 45 weight percent water, and most preferably about 20 to 40 weight percent water of the total weight of the silicone hydrogel. These silicone hydrogels are particularly suited for making contact lenses or intraocular lenses, preferably soft contact lenses.

A silicone hydrogel lens may be made by reacting a macromer with a reaction mixture that include silicone based monomers and hydrophilic monomers. This technique affords a high level of control of the structure of the ultimate product. Phase distribution can be controlled so that a more uniform coating or surface layer (if desired) can be applied to the lens. By "surface layer" is meant a distribution of material with a portion in contact with the environment and another portion in contact with a material having a different bulk property than that of the material from which the surface layer is formed. Additionally, processability of the lenses is also easier because of greater uniformity of properties across the lens.

The macromers are made by combining a/an (meth)acrylate and a silicone in the presence of a Group Transfer Polymerization ("GTP") catalyst. These macromers typically comprise copolymers of various monomers. They may be formed in such a way that the monomers come together in distinct blocks, or in a generally random distribution. These macromers may furthermore be linear, branched, or star shaped. Branched structures are formed for instance if polymethacrylates, or crosslinkable monomers such as 3-(trimethylsiloxy)propyl methacrylate are included in the macromer. Initiators, reaction conditions, monomers, and catalysts that can be used to

make GTP polymers are described in "Group-Transfer Polymerization" by O.W. Webster, in Encyclopedia of Polymer Science and Engineering Ed. (John Wiley & Sons) p. 580, 1987. These polymerizations are conducted under anhydrous conditions. Hydroxyl-functional monomers, like HEMA, can be incorporated as their trimethylsiloxy esters, with hydrolysis to form free hydroxyl group after polymerization. GTP offers the ability to assemble macromers with control over molecular weight distribution and monomer distribution on the chains. This macromer is then reacted with a reaction mixture comprising predominantly polydimethylsiloxane (preferably, mPDMS), and hydrophilic monomers.

Preferred macromer components include mPDMS, TRIS, methyl methacrylate, HEMA, DMA, methacrylonitrile, ethyl methacrylate, butyl methacrylate, 2-hydroxypropyl-1-methacrylate, 2-hydroxyethyl methacrylamide and methacrylic acid. It is even more preferred that the macromer is made from a reaction mixture comprising HEMA, methyl methacrylate, TRIS, and mPDMS. It is most preferred that macromer is made from a reaction mixture comprising, consisting essentially of, or consisting of about 19.1 moles of HEMA, about 2.8 moles of methyl methacrylate, about 7.9 moles of TRIS, and about 3.3 moles of monomethacryloxypropyl terminated mono-butyl terminated polydimethylsiloxane, and is completed by reacting the aforementioned material with about 2.0 moles per mole of 3-isopropenyl-ω,ω-dimethylbenzyl isocyanate using dibutyltin dilaurate as a catalyst.

Silicone hydrogels can be made by reacting blends of macromers, monomers, and other additives such as UV blockers, tints, internal wetting agents, and polymerization initiators. The reactive components of these blends typically comprise a combination of hydrophobic silicone with very hydrophilic components. Since these components are often immiscible because of their differences in polarity, it is particularly advantageous to incorporate a combination of hydrophobic silicone monomers with hydrophilic monomers, especially those with hydroxyl groups, into the macromer. The macromer can then serve to compatibilize the additional silicone and hydrophilic monomers that are incorporated in the final reaction mixture. These blends typically also contain diluents to further compatibilize and solubilize all components. Preferably, the silicone based hydrogels are made by reacting the following monomer mix: macromer; an $Si_{7-9}$ monomethacryloxy terminated polydimethyl siloxane; and hydrophilic monomers together with minor amounts of additives and photoinitiators. It is more preferred that the hydrogels are made by reacting macromer; an $Si_{7-9}$ monomethacryloxy terminated polydimethyl siloxane; TRIS; DMA; HEMA; and tetraethyleneglycol dimethacrylate ("TEGDMA"). It is most preferred that the hydrogels are made from the reaction of (all amounts are calculated as weight percent of the total weight of the combination) macromer (about 18%); an $Si_{7-9}$ monomethacryloxy terminated polydimethyl siloxane (about 28%); TRIS (about 14%); DMA (about 26%); HEMA (about 5%); TEGDMA (about 1%), polyvinylpyrrolidone ("PVP") (about 5%); with the balance comprising minor amounts of additives and photoinitiators, and that the reaction is conducted in the presence of 20%wt dimethyl-3-octanol diluent.

Various processes are known for molding the reaction mixture in the production of contact lenses, including spincasting and static casting. Spincasting methods are disclosed in U.S. Patents Nos. 3,408,429 and 3,660,545, and static casting methods are disclosed in U.S. Patents Nos. 4,113,224 and 4,197,266. The preferred method for producing contact lenses comprising the polymer described herein is by the direct molding of the silicone hydrogels, which is economical, and enables precise control over the final shape of the hydrated lens. For this method, the reaction mixture is placed in a mold having the shape of the final desired silicone hydrogel, i.e. water-swollen polymer, and the reaction mixture is subjected to conditions whereby the monomers polymerize, to thereby produce a polymer in the approximate shape of the final desired product. Then, this polymer mixture is optionally treated with a solvent and then water, producing a silicone hydrogel having a final size and shape which are quite similar to the size and shape of the original molded polymer article. This method can be used to form contact lenses and is further described in U.S. Patents Nos. 4,495,313; 4,680,336; 4,889,664; and 5,039,459. After producing the silicone hydrogel, it is preferred that the lens be coated with a hydrophilic coating. Some methods of adding hydrophilic coatings to a lens have been disclosed in the prior art, including U.S. Patents Nos. 3,854,982, 3,916,033, 4,920,184 and 5,002,794; WO 91/04283, and EPO 93810399.

The preferred range of the combined silicone-containing monomer of Structure I and additional silicone-containing monomers, if present in the reaction mixture, is from about 5 to 100 weight percent, more preferably about 10 to 90 weight percent, and most preferably about 15 to 80 weight percent of the reactive components in the reaction mixture. The preferred range of optional hydrophilic monomer if present is from about 5 to 80 weight percent, more preferably about 10 to 60 weight percent, and most preferably about 20 to 50 weight percent of the reactive components in the reaction mixture. The preferred range of diluent is from about 0 to 70 weight percent, more preferably about 0 to 50 weight percent, and most preferably about 0 to 20 weight percent of the total reaction mixture. The amount of diluent required varies depending on the nature and relative amounts of the reactive components.

In a preferred combination of reactive components about 10 to 60, more preferably about 15 to 50 weight percent of the reactive components is silicone-containing monomer, about 20 to 50 weight percent of the reactive components is silicone-containing monomer of Structure I, about 10 to 50 percent of the reactive components is a hydrophilic monomer, more preferably DMA, about 0.1 to 1.0 percent of the reactive components is a UV or visible light-active photoinitiator and about 0 to 20 weight percent of the total reaction mixture is a secondary or tertiary alcohol diluent, more preferably a tertiary alcohol.

The reaction mixtures described herein can be formed by any of the methods known to those skilled in the art,

such as shaking or stirring, and used to form polymeric articles or devices by the methods described earlier. For some monomer reaction mixtures it is preferred to polymerize the reaction mixtures at temperatures slightly above room temperature, such as 30-40°C, or below room temperature, such as 0-10°C, so as to prevent phase separation of the components.

Silicone hydrogels as described herein have high oxygen permeability. They have $O_2$ Dk values between 40 and 300 barrer determined by the polarographic method. Polarographic method measurements of oxygen permeability are made as follows. Lenses are positioned on the sensor then covered on the upper side with a mesh support. The oxygen which diffuses through the lens is measured using a polarographic oxygen sensor consisting of a 4 mm diameter gold cathode and a silver ring anode. The reference values are those measured on commercially available contact lenses using this method. Balafilcon A lenses available from Bausch & Lomb give a measurement of approximately 79 barrer. Etafilcon lenses give a measurement of about 20 to 25 barrer.

Contact lenses made from the silicone hydrogels described herein may be produced to include a surface layer that is more hydrophilic than the silicone hydrogel. Suitable materials for forming the surface layer are known in the art. Preferred materials include poly(acrylic acid), poly(methacrylic acid), poly(maleic acid), poly(itaconic acid), poly(acrylamide), block or random copolymers of (meth)acrylic acid, acrylic acid, maleic acid, itaconic acid with any reactive vinyl monomer, carboxymethylated polymers, such as carboxymethylcellulose, and the like, and mixtures thereof. Preferably, the carboxyl functional hydrophilic polymer is poly(acrylic acid), poly(methacrylic acid), poly(meth)acrylamide, or poly (acrylamide). More preferably, poly(acrylic acid) or poly(acrylamide) is used. Methods for coating contact lenses are disclosed in U.S. patent No. 6,087,415.

The non-limiting examples below further describe this invention. In the examples the following abbreviations are used:

Examples

| | |
|---|---|
| MBM | 3-methacryloxypropylbis(trimethylsiloxy)methylsilane |
| MPD | methacryloxypropylpentamethyl disiloxane |
| TRIS | 3-methacryloxypropyltris (trimethylsiloxy) silane |
| DMA | N,N-dimethylacrylamide |
| THF | tetrahydrofuran |
| TMI | dimethyl meta-isopropenyl benzyl isocyanate |
| HEMA | 2-hydroxyethyl methacrylate |
| TEGDMA | tetraethyleneglycol dimethacrylate |
| EGDMA | ethyleneglycol dimethacrylate |
| MMA | methyl methacrylate |
| TBACB mPDMS | tetrabutyl ammonium-m-chlorobenzoate monomethacryloxypropyl terminated polydimethylsiloxane |
| PDMS | polydimethylsiloxane |
| 3M3P | 3-methyl-3-propanol |
| Norbloc | 2-(2'-hydroxy-5-methacrylyloxyethylphenyl)-2H-benzotriazole |
| CGI 1850 | 1:1 (wt) blend of 1-hydroxycyclohexyl phenyl ketone and bis(2,6-dimethoxybenzoyl)-2,4-4-trimethylpentyl phosphine oxide |
| PVP | poly(N-vinyl pyrrolidone) |
| IPA | isopropyl alcohol |
| DAROCURE 1173 | 2-hydroxy-2-methyl-1-phenyl-propan-l-one |
| D3O | 3, 7-dimethyl-3-octanol |
| HOAc | acetic acid |
| TAA | t-amyl alcohol |

PREPARATION 1 - Preparation of Polysiloxane Monomer

500 grams of $\alpha,\omega$-bisaminopropyl polydimethylsiloxane (5000 MW) and 68 grams of glycidyl methacrylate were combined and heated with stirring at 100°C for 10 hours. The product was extracted five times with 1500 ml of acetonitrile to remove residual glycidyl methacrylate to give a clear oil. IR: 3441, 2962, 1944, 1725, 1638, 1612, 1412 $cm^{-1}$. This product will be referred to as "the reaction product of glycidyl methacrylate and 5000 MW $\alpha,\omega$-bisaminopropyl polydimethylsiloxane" or alternatively bis(N,N-bis-2-hydroxy-3-methacryloxypropyl)aminopropyl polydimethylsiloxane.

Example 1

38.2 parts by weight of the product of PREPARATION 1 was combined with 28.8 parts MBM, 33 parts DMA and 1 part DAROCUR 1173 and diluted with 3-methyl-3-pentanol to make a reaction mixture in which the diluent made up 9% of the mass of the complete reaction mixture. The resulting reaction mixture was a clear, homogeneous solution. Polypropylene contact lens molds were filled, closed and irradiated with a total of 3.2 J/cm2 UV light from a fluorescent UV source over a 30-minute period. The molds were opened and the lenses were released into isopropanol and then transferred into deionized water.

The lenses were clear and had a tensile modulus of 205 ±12 g/mm2, an elongation at break of 133 ±37 %, and an equilibrium water content of 24.2 ±0.2 %. Tensile properties were determined using an Instron™ model 1122 tensile tester. Equilibrium Water Contents (EWC) were determined gravimetrically and are expressed as:

$$\%EWC = 100 \times (\text{mass of hydrated lens} - \text{mass of dry lens})/\text{mass of hydrated lens}$$

Examples 2-16

Reaction mixtures were made using the formulation of Example I, but with amounts listed in Table 1. All reaction mixtures and lenses were clear.

Table 1 - Silicone Hydrogel Formulations and Properties.

| Example | 1 | 2 | 3 | 4 |
|---|---|---|---|---|
| Composition | | | | |
| Prep Macromer | 38.2 | 33.5 | 27.6 | 22.3 |
| MBM | 28.8 | 33.5 | 39.4 | 44.7 |
| DMA | 33 | 33 | 33 | 33 |
| Darocur 1173 | 0.4 | 0.4 | 0.4 | 0.4 |
| % of Diluent | 9 | 7 | 5 | 4 |
| EWC(%) | 24.2±0.2 | 23.3±0.3 | 22.4±0.2 | 24.2±0.3 |
| Modulus (psi) | 205±12 | 178±11 | 136±4 4 | 109±3 |
| % Elongation | 133±37 | 156±39 | 168±48 | 200±58 |
| Dk (barters) | 142.3 | 144.9 | 145.1 | 109.3 |
| Example | 5 | 6 | 7 | 8 |
| Composition | | | | |
| Prep Macromer | 37.1 | 32.5 | 26.8 | 21.7 |
| MBM | 27.9 | 32.5 | 38.2 | 43.3 |
| DMA | 35 | 35 | 35 | 35 |
| Darocur 1173 | 0.4 | 0.4 | 0.4 | 0.4 |
| % of Diluent | 10 | 7 | 5 | 11 |
| EWC(%) | 26.1±0.3 | 25.8±0,3 | 25.8±0.3 | 25.8±0.1 |
| Modulus (psi) | 179±5 | 215±7 | 132±6 | 101±4 |
| % Elongation | 151±42 | 106±30 | 195±65 | 1799±47 |
| Dk (barters) | 118.8 | 129.6 | 116.5 | 107.9 |
| Example | 9 | 10 | 11 | 12 |
| Composition | | | | |
| Prep Macromer | 35.4 | 31 | 25.5 | 20.7 |
| MBM | 26.6 | 31 | 36.5 | 41.3 |
| DMA | 38 | 38 | 38 | 38 |

(continued)

| Example | 1 | 2 | 3 | 4 |
|---|---|---|---|---|
| Darocur 1173 | 0.4 | 0.4 | 0.4 | 0.4 |
| % of Diluent | 12 | 7 | 7 | 5 |
| EWC(%) | 29.4±0.3 | 30.0±0.3 | 26.6±0.2 | 26.7±0,3 |
| Modulus (psi) | 215 ± 7 | 175±7 | 132 ± 51 | 106±4 |
| % Elongation | 99±22 | 132±40 | 166±51 | 204±55 |
| Dk (barrers) | 105.6 | 115.7 | 104.9 | 100.3 |
| Example | 13 | 14 | 15 | 16 |
| Composition | | | | |
| Prep Macromer | 34.2 | 30 | 24.7 | 20 |
| MBM | 25.8 | 30 | 35.3 | 40 |
| DMA | 40 | 40 | 40 | 40 |
| Darocur | 0.4 | 0.4 | 0.4 | 0.4 |
| % of Diluent | 12 | 11 | 8 | 9 |
| EWC(%) | 32.1±0.1 | 31.2±0.2 | 31.6±0.3 | 31.7±0.2 |
| Modulus (psi) | 218±11 | 170±6 | 131±4 | 95±3 |
| % Elongation | 110±34 | 130±51 | 185±53 | 203±47 |
| Dk (barrers) | 112.4 | 104.6 | 90.8 | 92.3 |
| * % of the total reaction mixture of reactive components, and diluent. 1 psi = 6.895 kPa | | | | |

Example 17

21.5% of α,ω-bismethacryloxypropyl polydimethylsiloxane with an average molecular weight of 5000 g/mol was combined with 42.5% MBM, 35% DMA and 1% DAROCUR 1173 and diluted with 3-methyl-3-pentanol to give a clear solution containing 22 weight % diluent. Lenses were made following the procedure of Example 1. The lens properties are shown in Table 2.

Example 18

Lenses were made using the procedure and reaction mixture described in Example 17, but with MPD in place of MBM. The lens properties are shown in Table 2.

Comparative Example 1

A reaction mixture was made using the formulation of Example 17, but with TRIS in place of MBM, and with 20% diluent. Lenses were made following the procedure of Example 1. The lens properties, shown in Table 2, show that the use of MBM (Example 17) or MPD (Example 18) gave lower moduli when used in place of TRIS.

Table 2 - Compositions and Properties of Silicone Hydrogel Polymers.

| | Example 17 | Comp. Ex. 1 | Example 18 |
|---|---|---|---|
| PDMS* | 21.5 | 21.5 | 21.5 |
| TRIS | | 42.5 | |
| MBM | 42.5 | | |
| MPD | | | 42.5 |
| DMA | 35 | 35 | 35 |
| | | | |

(continued)

| | Example 17 | Comp. Ex. 1 | Example 18 |
|---|---|---|---|
| Monomer/Diluent | 78/22 | 80/20 | 78/22 |
| | | | |
| Modulus | 65±2 psi | 87±3 psi | 55±2 psi |
| Elongation at break | 278±60% | 307±88% | 263±81% |
| Dk | 110 barrers | 147 barrers | 75.6 barrers |
| EWC | 28.2±0.3% | 28.9±0.3% | 31.0±0.3% |
| PDMS* = α,ω-bismethacryloxypropyl polydimethylsiloxane, ave. MW of 5000 g/mol<br>1 psi = 6.895 kPa | | | |

Example 19

29.0% of α,ω-bismethacryloxypropyl polydimethylsiloxane with an average molecular weight of 5000 g/mol was combined with 35% monomethacryloxypropyl terminated PDMS (T1, Structure II, MW = 800 to 1000), 35% DMA and 1% DAROCUR 1173 and diluted with 3-methyl-3-pentanol to give a clear solution containing 23.0 weight % diluent. Lenses were made following the procedure of Example 1. The lens properties are shown in Table 3.

Example 20

29.0% of α,ω-bismethacryloxypropyl polydimethylsiloxane with an average molecular weight of 5000 g/mol was combined with 35% (3-methacryloxy-2-hydroxypropyloxy)propylbis(trimethylsiloxy)methylsilane (T2), 35% DMA and 1 % DAROCUR 1 173 and diluted with 3M3P to give a clear solution containing 37.6 weight % diluent. Lenses were made following the procedure of Example 1. The lens properties are shown in Table 3.

Table 3 - Compositions and Properties of Silicone Hydrogel Polymers.

| | Example 19 | Example 20 |
|---|---|---|
| PDMS | 29.0 | 29.0 |
| T1 | 35.0 | |
| T2 | | 35.0 |
| DMA | 35.0 | 35.0 |
| DAROCUR 1173 | 1.0 | 1.0 |
| | | |
| %/Diluent | 23.0 | 37.6 |
| | | |
| Modulus | 193±15 psi | 175±11 psi |
| Elongation at break | 87.9±42% | 108±54% |
| Dk | 171 barrers | 94 barrers |
| EWC | 31.1±0.2% | 33.4±0:2% |
| 1 psi = 6.895 kPa | | |

The Examples show that the contact lenses made using the silicone-containing monomers of Structure I provide contact lenses which are clear and have a lower Young's modulus than the contact lenses made according to the Comparative Examples. A low modulus is desirable to provide contact lenses which are comfortable when worn.

Example 21

The following compositions were prepared, and cured with UV light into flat sheets. These sheets were extracted with isopropanol to remove diluent and any unreacted monomer, then equilibrated in isotonic borate buffered saline.

| | A* | B* | C* | D | E |
|---|---|---|---|---|---|
| PDMS 1000 MW | 11.41 g | 0g | 0g | 0g | 0g |
| PDMS 3000 MW | 0g | 11.38g | 0g | 0g | 0g |
| TRIS | 0g | 0g | 11.38g | 0g | 0g |
| mPDMS 1000 MW | 0g | 0g | 0g | 11.38g | 0g |
| mPDMS 5000 MW | 0g | 0g | 0g | 0g | 11.38g |
| DMA | 6.13g | 6.15g | 6.13g | 6.13g | 6.13g |
| EGDMA | 0g | 0g | 0.35g | 0.37g | 0.35g |
| Darocur 1173 | 0.08g | 0.08g | 0.08g | 0.08g | 0.08g |
| Diluent† | 7.50g | 10.40g | 7.50g | 7.50g | 15.42g |
| *For comparison, not according to the invention<br>†3M3P | | | | | |

The structure of PDMS was:

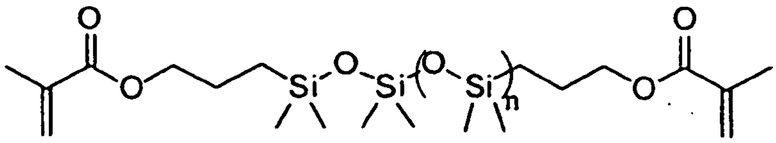

1000MW was purchased from Gelest Inc. as "MCR-M11" brand mPDMS.
5000MW was purchased from Gelest Inc. as "MCR-M 17" brand mPDMS.
(Molecular weights for mPDMS and PDMS shown above are number average molecular weights).

The structure of mPDMS used in this example was:

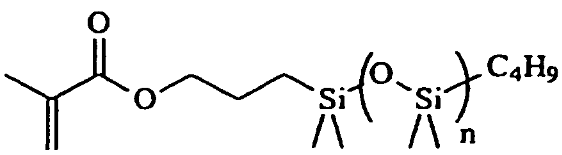

For the determination of the properties after hydration, the 25 mm diameter hydrogel disks (each approximately 0.7 mm thick) were held between the 25 mm diameter parallel plates (plated with a crystal clad 80/100 grit coating) of a controlled stress rheometer (ATS Stresstech) with a vertical force of 10 N. The disks were immersed in water during the test to prevent dehydration. A stress sweep from 100 to 10,000 Pa at 1 Hz and 25°C was conducted on a disk of each material, to determine the range of the linear viscoelastic region for each formulation.

Once the limit of the linear viscoelastic region had been determined, the rheometer was set in frequency sweep mode using a stress less than the predetermined limit, and G', G", $\eta^*$, and tan $\delta$ of the 25 mm diameter hydrated disks were measured as a function of frequency from 0.01 - 30 Hz at several temperatures (10, 25, 40 and 55°C), all the while maintaining a vertical force of 10 N on the hydrogel disks. The individual frequency scans of G' and tan $\delta$ were then combined to form master curves for each material. The data for the shear modulus G' and tan $\delta$ of the hydrogels at a

reference temperature of 25°C are shown in tables 4 and 5.

The shear modulus of sample A was greater than B in the frequency range in which they were tested (as would be expected since the only difference between them is the molecular weight between crosslinks: 1000 vs. 3000), and their shear moduli gradually increased with increasing frequency. At the high frequency extreme, sample A appeared to be approaching a transition, since the modulus appeared to be approaching a region of more rapid increase.

The tan δ of samples A and B were below 0.2 for the most part, with the tan δ of sample A increasing at the high frequencies in anticipation of a transition at higher frequencies.

Similarly, the shear modulus of sample D was greater than E in the frequency range in which they were tested (the only difference between them is the molecular weight of the dangling chains: 1000 vs. 5000), and their shear moduli gradually increased with increasing frequency.

The tan δ of samples D and E was below 0.1 for the entire frequency range in which they were tested, with the tan δ of sample E (MW 1000) below that of sample D (MW 5000).

The shear modulus of sample C increased rapidly in the frequency range in which it was tested, indicating a transition from a rubbery to a more rigid state. The bulky TRIS moiety reduced the internal molecular mobility of the hydrogel (relative to the PDMS and mPDMS polymers), and caused the "glass" transition to shift to lower frequencies (≡ higher temperatures).

The tan δ of sample C reached a maximum at 100 hz at the reference temperature of 40°C, indicative of the transition.

The addition of mono-capped PDMS was more effective than, the addition of di-capped PDMS in reducing the tan δ of the hydrogel. The elastic properties of a material were controlled by the judicious addition of mPDMS while maintaining the homogeneity of the material. On the other hand, the addition of TRIS increased the tan δ of a material.

Table 4

| | G' (Pa) | | | | |
|---|---|---|---|---|---|
| | | | | | |
| Frequency | A | B | C | D | E |
| (Hz) | | | | | |
| 30.0000 | 5.84E+05 | 2.89E+05 | 2.03E+06 | 3.41E+05 | 2.22E+05 |
| 20.0000 | 5.70E+05 | 2.92E+05 | 1.81E+06 | 3.43E+05 | 2.24E+05 |
| 15.0000 | 15.56E+05 | 2.92E+05 | 1.63E+06 | 3.42E+05 | 2.23E+05 |
| 10.0000 | 5.37E+05 | 2.90E+05 | 1.42E+06 | 3.39E+05 | 2.24E+05 |
| 9.0000 | 15.34E+05 | 2.89E+05 | 1.37E+06 | 3.37E+05 | 2.24E+05 |
| 8.0000 | 15.27E+05 | 2.89E+05 | 1.35E+06 | 3.38E+05 | 2.24E+05 |
| 6.9971 | 15.22E+05 | 2.88E+05 | 1.29E+06 | 3.38E+05 | 2.22E+05 |
| 6.0000 | 15.16E+05 | 2.86E+05 | 1.22E+06 | 3.35E+05 | 2.22E+05 |
| 5.0000 | 15.08E+05 | 2.85E+05 | 1.13E+06 | 3.34E+05 | 2.22E+05 |
| 4.0000 | 4.96E+05 | 2.82E+05 | 1.07E+06 | 3.31E+05 | 2.20E+05 |
| 3.0000 | 4.84E+05 | 2.81E+05 | 9.88E+05 | 3.28E+05 | 2.20E+05 |
| 2.0000 | 4.74E+05 | 2.76E+05 | 8.49E+05 | 3.24E+05 | 2.20E+05 |
| 1.5000 | 4.63E+05 | 2.73E+05 | 7.85E+05 | 3.21E+05 | 2.20E+05 |
| 1.0000 | 4.48E+05 | 2.71E+05 | 6.96E+05 | 13.16E+05 | 2.19E+05 |
| 0.9000 | 4.46E+05 | 2.70E+05 | 6.72E+05 | 13.18E+05 | 2.19E+05 |
| 0.8000 | 4.43E+05 | 2.69E+05 | 6.62E+05 | 3.15E+05 | 2.17E+05 |
| 0.7001 | 4.39E+05 | 2.68E+05 | 6.33E+05 | 13.12E+05 | 2.18E+05 |
| 0.6000 | 4.35E+05 | 2.65E+05 | 6.07E+05 | 3.12E+05 | 2.18E+05 |
| 0.5000 | 4.32E+05 | 2.65E+05 | 5.78E+05 | 3.10E+05 | 2.17E+05 |
| 0.4000 | 4.25E+05 | 2.62E+05 | 5.48E+05 | 3.07E+05 | 2.16E+05 |

(continued)

| | G' (Pa) | | | | |
|---|---|---|---|---|---|
| | | | | | |
| Frequency | A | B | C | D | E |
| 0.3000 | 4.18E+05 | 2.60E+05 | 5.06E+05 | 3.06E+05 | 2.15E+05 |
| 0.2000 | 4.07E+05 | 2.58E+05 | 4.59E+05 | 3.01E+05 | 2.14E+05 |
| 0.1500 | 4.00E+05 | 2.56E+05 | 4.31E+05 | 2.99E+05 | 2.18E+05 |
| 0.1000 | 3.91E+05 | 2.53E+05 | 3.93E+05 | 2.94E+05 | 2.12E+05 |
| 0.0900 | 3.90E+05 | 2.54E+05 | 3.82E+05 | 2.94E+05 | 2.12E+05 |
| 0.0800 | 3.86E+05 | 2.52E+05 | 3.75E+05 | 2.91E+05 | 2.13E+05 |
| 0.0700 | 3.86E+05 | 2.52E+05 | 3.63E+05 | 2.90E+05 | 2.13E+05 |
| 0.0600 | 3.83E+05 | 2.51E+05 | 3.52E+05 | 2.89E+05 | 2.12E+05 |
| 0.0500 | 3.80E+05 | 2.50E+05 | 3.39E+05 | 2.87E+05 | 2.12E+05 |
| 0.0400 | 3.75E+05 | 2.49E+05 | 3.27E+05 | 2.88E+05 | 2.13E+05 |
| 0.0300 | 3.74E+05 | 2.49E+05 | 3.07E+05 | 2.83E+05 | 2.11E+05 |
| 0.0200 | 3.64E+05 | 2.44E+05 | 2.87E+05 | 2.79E+05 | 2.09E+05 |
| 0.0150 | 3.60E+05 | 2.44E+05 | 2.76E+05 | 2.75E+05 | 2.07E+05 |
| 0.0100 | 3.53E+05 | 2.41E+05 | 2.58E+05 | 2.71E+05 | 2.08E+05 |

Table 5

| | tan delta | | | | |
|---|---|---|---|---|---|
| | | | | | |
| Frequency | A | B | C | D | E |
| (Hz) | | | | | |
| 30.0000 | 0.2371 | 0.1084 | 0.5259 | 0.1025 | 0.0500 |
| 20.0000 | 0.2107 | 0.0964 | 0.5392 | 0.0869 | 0.0394 |
| 15.0000 | 0.1925 | 0.0917 | 0.5584 | 0.0767 | 0.0347 |
| 10.0000 | 0.1804 | 0.0917 | 0.5664 | 0.0725 | 0.0326 |
| 9.0000 | 0.1690 | 0.0877 | 0.5745 | 0.0671 | 0.0270 |
| 8.0000 | 0.1622 | 0.0871 | 0.5540 | 0.0704 | 0.0290 |
| 6.9971 | 0.1631 | 10.0876 | 0.5534 | 0.0702 | 0.0240 |
| 6.0000 | 0.1594 | 0.0883 | 0.5381 | 0.0682 | 0.0298 |
| 5.0000 | 0.1538 | 0.0872 | 10.5690 | 0.0656 | 0.0260 |
| 4.0000 | 0.1471 | 0.0839 | 0.5568 | 0.0635 | 0.0284 |
| 3.0000 | 0.1461 | 0.0879 | 0.5192 | 0.0633 | 0.0226 |
| 2.0000 | 0.1472 | 0.0902 | 0.5352 | 0.0607 | 0.0240 |
| 1.5000 | 0.1219 | 0.0892 | 0.5221 | 0.0654 | 0.0172 |
| 1.0000 | 0.1199 | 0.0953 | 0.5070 | 0.0648 | 0.0259 |
| 0.9000 | 0.1209 | 0.0915 | 0.4974 | 0.0553 | 0.0242 |

(continued)

| Frequency | A | B | C | D | E |
|---|---|---|---|---|---|
| 0.8000 | 0.1294 | 0.0978 | 0.4892 | 0.0601 | 0.0267 |
| 0.7001 | 0.1230 | 0.0898 | 0.4852 | 0.0647 | 0.0260 |
| 0.6000 | 0.1160 | 0.0953 | 0.4742 | 0.0640 | 0.0310 |
| 0.5000 | 0.1096 | 0.0939 | 0.4754 | 0.0664 | 0.0150 |
| 0.4000 | 0.1133 | 0.0969 | 0.4641 | 0.0626 | 0.0254 |
| 0.3000 | 0.1113 | 0.0976 | 0.4469 | 0.0651 | 0.0147 |
| 0.2000 | 0.1083 | 0.1019 | 0.4256 | 0.0653 | 0.0270 |
| 0.1500 | 0.1067 | 0.1047 | 0.4039 | 0.0699 | 0.0244 |
| 0.1000 | 0.1039 | 0.1066 | 0.3895 | 0.0744 | 0.0277 |
| 0.0900 | 0.1045 | 0.1084 | 0.3848 | 0.0761 | 0.0300 |
| 0.0800 | 0.1042 | 0.1066 | 0.3831 | 0.0774 | 0.0234 |
| 0.0700 | 0.0988 | 0.1076 | 0.3749 | 0.0709 | 0.0155 |
| 0.0600 | 0.0969 | 0.1112 | 0.3705 | 0.0755 | 0.0262 |
| 0.0500 | 0.1024 | 0.1137 | 0.3496 | 0.0765 | 0.0209 |
| 0.0400 | 0.0887 | 0.1117 | 0.3349 | 0.0782 | 0.0257 |
| 0.0300 | 0.0914 | 0.1160 | 0.3282 | 0.0830 | 0.0322 |
| 0.0200 | 0.1060 | 0.1185 | 0.3248 | 0.0792 | 0.0241 |
| 0.0150 | 0.1038 | 0.1270 | 0.2978 | 0.0753 | 0.0391 |
| 0.0100 | 0.1038 | 0.1326 | 0.2800 | 0.0846 | 0.0285 |

Example 22- SEALs Study

A double masked, contralateral, randomized, complete block clinical study was conducted to determine the relationship between SEALs and the Young's modulus of contact lenses. Lenses were made from two different silicone hydrogel compositions as follows.

Table 6

| Component | Lens A (Wt %) | Lens B(Wt %) |
|---|---|---|
| Silicone based macromer | 17.98 | 17.98 |
| TRIS | 21 | 14 |
| mPDMS | 21 | 28 |
| DMA | 25.5 | 26 |
| HEMA | 5 | 5 |
| PVP | 5 | 5 |
| TEGDMA | 1.5 | 1 |

The silicone-based macromer refers to a prepolymer in which one mole was made from an average of 19.1 moles of 2-hydroxyethyl methacrylate, 2.8 moles of methyl methacrylate, 7.9 moles of methacryloxypropyltris(trimethylsiloxy)silane, and 3.3 moles of monomethacryloxypropyl terminated mono-butyl terminated polydimethylsiloxane. The macromer was completed by reacting the aforementioned material with 2.0 moles per mole of 3-isopropenyl-ω,ω-dimethylbenzyl isocyanate using dibutyltin dilaurate as a catalyst for the Group Transfer Polymerization used to produce the macromer product.

Weight percentages are computed based on the total weight of all components; the balance of the compositions in Table 5 comprise initiators and additives. The mPDMS was a mono-methacryloxy propyl terminated mPDMS.

Lenses were made from these compositions having a nominal base curve of 8.5 mm and a diameter of 14.0 mm at 22°C. They had a nominal center thickness of 0.110 mm and a measured center thickness of 0.119 (Lens A) and 0.085 mm (Lens B). Both lenses were coated with a hydrophilic coating to enhance biocompatibility and wettability. Lens A had a Young's modulus of 754.3 kPa (109.4 psi) and Lens B had a Young's modulus of 610.2 kPa (88.5 psi).

Subjects participating in the study were given a baseline examination and fitted with lenses made from the compositions shown in Table 6. They then wore the lenses for one week. Lenses were worn for daily wear. The subjects returned for a clinical evaluation of the presence of SEALs and other clinical data (e.g. visual acuity). Nineteen subjects (38 eyes) completed the study, eight of whom had a history of SEALs. Ten (10) eyes wearing Lens A exhibited SEALs. No eyes wearing Lens B exhibited SEALs.

Example 23 - SEALs Study

A study similar to that of Example 22 was conducted using lenses of different center thicknesses. The lenses had the following characteristics and gave the results shown in Table 7. In Table 7, column 4, "E" represents Young's modulus and "CT" represents the center thickness.

Table 7

| Lens Type | Modulus (psi) | CT (μm) | $E(CT^2)$ (psi•mm2) | SEALs (%) |
|---|---|---|---|---|
| Etafilcon | 40 | 110 | 0.48 | 1 |
| Lens A* | 110 | 124 | 1.69 | 10 |
| Lens B* | 88 | 105 | 0.97 | 0 |
| Lens B* | 88 | 170 | 2.54 | 24 |
| Lotrafilcon A | 238 | 80 | 1.52 | 5 |
| Balafilcon A | 155 | 90 | 1.26 | 5 |
| *Refers to lens composition corresponding to Example 22.<br>1 psi.$mm^2$ = 6.895 kPa.$mm^2$ | | | | |

This examples shows the combined effect of lens center thickness and modulus on SEALs.

Example 24 (Prophetic)

A set of lens characteristics is established for lenses that will not result in SEALs. This is accomplished by comparing the relative deflection $(k(Et^2)^{-1}$, where k = constant. E = Young's modulus, and t = center thickness of lenses having different moduli with those of the moduli and thicknesses of the lenses of Example 22 that did not induce SEALs. This range is used to establish mPDMS concentration ranges that will result in lenses whose use will not induce SEALs.

| E (psi) | Thickness (μm) | [mPDMS](wt %)* |
|---|---|---|
| 60 | <129 | 30 |
| 100 | <100 | 20 |
| 130 | <88 | 5 |
| *mPDMS concentration based on a composition comprised of the components of Lenses B in Example 22. One skilled in the art will recognize adjustments in mPDMS concentration when the lens is based on silicone hydrogels comprising additional or alternative components.<br>1 psi = 6.895 kPa | | |

Example 25 (GTP Macromer Preparation)

Macromer A:

To a solution of 13.75 ml of a 1M solution of TBACB in THF, 30.0g bis(dimethylamino)methylsilane, 61.39 g p-xylene, 154.28 g methyl methacrylate, and 1892.13 g 2-(trimethylsiloxy)ethyl methacrylate in 4399.78 g THF at 14°C, under a $N_2$ atmosphere, was added 191.75 g of 1-trimethylsiloxy-1-methoxy-2-methylpropene. 30 ml of additional TBACB in. THF (0.40 M) was added over a period of 260 minutes, during which time the reaction mixture was allowed to exotherm, and then cooled to 30°C. Sixty minutes after addition of 2-(trimethylsiloxy)ethyl methacrylate, a solution of 467.56 g 2-(trimethylsiloxy)ethyl methacrylate, 3636.6 g mPDMS and 3673.84 g TRIS and 20.0 g bis(dimethylamino)methylsilane was added, and the mixture was allowed to exotherm and then cooled to 30°C for 2 hours. A solution of 10.0g bis (dimethylamino)methylsilane, 154.26 g methyl methacrylate, and 1892.13 g 2-(trimethylsiloxy)ethyl methacrylate was then added and the mixture was again allowed to exotherm. After 2 hours, 2 gallons of anhydrous THF was added, followed by a solution of 439.69 g water, 740.6 g methanol and 8.8 g dichloroacetic acid after the solution was allowed to cool down to 34°C. The mixture was refluxed for 4.5 hours, heating with an oil bath at 110°C, and volatiles were distilled off at 135°C, with addition of toluene to aid in removal of water, until a vapor temperature of 110°C is reached.

The reaction flask was cooled to 110°C, and a solution of 443 g TMI and 5.7 g dibutyltin dilaurate was added. The mixture was reacted for 3.5 hours, then cooled to 30°C. The toluene was evaporated under reduced pressure to yield off-white, anhydrous, waxy, reactive macromer. The theoretical OH content of the macromer is 1.69 mmol/g.

Macromer B:

The procedure for Macromer A used except that 19.1 mole parts HEMA, 7.8 mole parts MAA, 7.9 mole parts TRIS, 3.3 mole parts TRIS, and 2.0 mole parts TMI were used.

Macromer C:

The procedure for Macromer A was used except that 19.1 mole parts HEMA, 7.9 mole parts TRIS, 3.3 mole parts TRIS, and 2.0 mole parts TMI were used.

Examples 26 - 36 (Lens Formation)

Hydrogel were made from the monomer mixtures shown on Table 8. All amounts are calculated as weight percent of the total weight of the combination with the balance of the mixture being minor amounts of additives. Polymerization was conducted in the presence of the diluents listed.

Contact lenses were formed by adding about 0.10 g of the monomer mix to the cavity of an eight cavity lens mold of the type described in U.S. Patent 4,640,489 and curing for 1200 sec. Polymerization occurred under a nitrogen purge and was photoinitiated with 5 mW $cm^{-2}$ of UV light generated with an Andover Corp. 420PS10-25 AM39565-02 light filter. After curing, the molds were opened, and the lenses were released into a 1:1 blend of water and ethanol, then leached in ethanol to remove any residual monomers and diluent. Finally the lenses were equilibrated in physiological borate-buffered saline. The lenses had the properties described in Table 8.

Table 8

| EXAMPLE | 26 | 27 | 28 | 29 | 30 | 31 | 32 | 33 | 34 | 35 | 36 |
|---|---|---|---|---|---|---|---|---|---|---|---|
| Macromer | A | B | B | C | C | B | B | B | B | B | B |
| Macromer | 30.00 | 17.98 | 25.00 | 60.00 | 20.00 | 17.98 | 17.98 | .19.98 | 17.98 | 17.98 | 19.98 |
| Tris | 0.00 | 14.00 | 18.00 | 0.00 | 40.00 | 21.00 | 21.00 | 8.00 | 20.00 | 25.00 | 20.00 |
| DMA | 27.00 | 26.00 | 28.00 | 36.00 | 36.00 | 25.50 | 25.50 | 26.00 | 22.00 | 9.00 | 23.00 |
| MPDMS | 39.00 | 28.00 | 18.00 | 0.00 | 0.00 | 21.00 | 21.00 | 28.50 | 25.50 | 30.00 | 28.50 |
| Norbloc | 2.00 | 2.00 | 2.00 | 3.00 | 3.00 | 2.00 | 2.00 | 2.00 | 2.00 | 2.00 | 2.00 |
| CGI 1850 | 2.00 | 1.00 | 1.00 | 1.00 | 1.00 | 1.00 | 1.00 | 1.00 | 1.00 | 1.00 | 1.00 |
| TEGDMA | 0.00 | 1.00 | 0.00 | 0.00 | 0.00 | 1.50 | 1.50 | 1.50 | 1.50 | 0.50 | 1.50 |
| HEMA | 0.00 | 5.00 | 0.00 | 0.00 | 0.00 | 5.00 | 5.00 | 5.00 | 5.00 | 7.00 | 5.00 |
| Blue HEMA | 0.00 | 0.02 | 0.00 | 0.00 | 0.00 | 0.02 | 0.02 | 0.02 | 0.02 | 0.02 | 0.02 |
| PVP | 0.00 | 5.00 | 8.00 | 0.00 | 0.00 | 5.00 | 5.00 | 8.00 | 5.00 | 7.50 | 9.00 |
| | | | | | | | | | | | |
| Diluent % | 41 | 20 | 20 | 20 | None | 20 | 50.00 | 37.50 | 20.00 | 40.00 | 50.00 |
| Diluent | 3M3P | *D30 | 3M3P | 3M3P | NA | D3O | TAA | 3M3P | ethyl lactate | 3M3P | 3M3P |
| | | | | | | | | | | | |
| %EWC | 49.2 | 39.1 | 48.5 | 40.9 | 37.1 | | | | | | |
| Modulus (psi) | 73 | 85.3 | 59 | 273 | 102 | | | | | | |
| % Elongation | 200 | 251 | 261 | 74 | 384 | | | | | | |
| Dk (edge corrected) | 109.4 | 109 | 97.9 | 34.5 | 79.8 | | | | | | |
| *With 5% HOAc added.<br>1 psi = 6.895 kPa | | | | | | | | | | | |

Example 37

To lenses from Example 27 immersed in a solution of 1.0% 250,000 $M_w$ polyacrylic acid in water at 45°C was added 0.1% 1-[3-(dimethylamino)propyl]-3-ethylcarbodiimide hydrochloride. After stirring for 30 minutes the lenses are rinsed in borate-buffered saline solution. The dynamic contact angles of the resulting poly(sodium acrylate)-coated lenses are 44° advancing and 42° receding.

Comparative Example 2

Lenses were made by curing a blend of 57.5% TRIS, 40.0 % DMA, 1.5% 1,3-bis(3-methacryloxypropyl)tetrakis (trimethylsiloxy)disiloxane and 1.0% 2-hydroxy-2-methyl-1-phenyl-propan-1-one (by weight) in contact lens molds under UV light. The lenses were released into ethanol and transferred to borate-buffered saline solution. The lenses had properties given in Table 9, but when extended they returned to their original shape very slowly due to their high tan δ. In fact, even during ordinary lens handling, these lenses typically did not retain a their symmetrical shape. Further, they had less than desirable Dks and were very unwettable.

Table 9 - Properties of Lenses From Comparative Example 2.

| | |
|---|---|
| Tensile Modulus (psi) | 67 |
| Elongation at break (%) | 674 |
| Water Content (%) | 40.2 |
| Edge corrected Dk (barrers) | 70.2 |
| 1 psi = 6.895 kPa | |

**Claims**

1. A silicone hydrogel contact lens comprising a center thickness (CT) of 50 to 160 μm and a Young's modulus (E) of 275.8 to 2068 kPa (40 to 300 psi), wherein (E)($CT^2$) is less than 6.895 kPa.$mm^2$ (1 psi·$mm^2$).

2. The silicone hydrogel contact lens of claim 1, further comprising a tan (delta) less than 0.3 at a frequency of 1 Hz at 25°C.

3. The silicone hydrogel contact lens of claim 1, further comprising an $O_2$Dk greater than 40 barrer.

4. The silicone hydrogel of claim 2, further comprising an $O_2$DK of greater than 40 barrer.

5. The silicone hydrogel contact lens of claim 1, 2, 3, or 4, further comprising at least 5% wt of a mono-alkyl terminated polydimethylsiloxane having the structure:

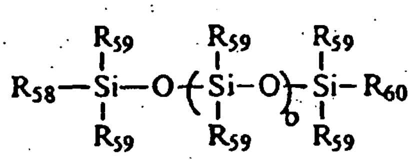

where b = 0 to 100; $R_{58}$ is a monovalent group comprising an ethylenically unsaturated moiety; each $R_{59}$ is independently a monovalent alkyl, or aryl group, which may be further substituted with alcohol, amine, ketone, carboxylic acid or ether groups; and $R_{60}$ is a monovalent alkyl, or aryl group, which may be further substituted with alcohol, amine, ketone, carboxylic acid or ether groups.

6. The silicone hydrogel contact lens of claim 5, wherein b = 8 to 10, $R_{58}$ is a monovalent group containing a styryl, vinyl, or methacrylate moiety, each $R_{59}$ is methyl, and $R_{60}$ is a $C_{3-8}$ alkyl group.

7. The silicone hydrogel contact lens of claim 5, wherein b = 8 to 10, $R_{58}$ is a methacrylate moiety; each $R_{59}$ is methyl; and $R_{60}$ is a butyl group.

8. The silicone hydrogel contact lens of claim 5, wherein the monoalkyl terminated polydimethylsiloxane is a monomethacryloxypropyl terminated polydimethylsiloxane.

9. The contact lens of claim 5, wherein the lens thicknesses less than 85 μm.

10. The contact lens of claim 5, wherein the thickness is less than about 100 μm and the Young's modulus is less than 689.5 kPa (100 psi).

11. The contact lens of claim 5, wherein the amount of mono-alkyl terminated polydimethylsiloxane is about 20 % wt.

12. The contact lens of claim 5, wherein the thickness is less than 129 μm and the Young's modulus is less than 413.7 kPa (60 psi).

13. The contact lens of claim 2, wherein the amount of mono-alkyl terminated polydimethylsiloxane is about 30% wt.

## Patentansprüche

1. Silikonhydrogel-Kontaktlinse, umfassend eine Mittendicke (CT) von 50 bis 160 μm und einen Young'schen Modul (E) von 275.8 to 2068 kPa (40 bis 300 psi), wobei (E)($CT^2$) weniger als 6.895 kPa·$mm^2$ (1 psi · $mm^2$) ist.

2. Silikonhydrogel-Kontaktlinse nach Anspruch 1, weiter umfassend ein tan (delta) von weniger als 0,3 bei einer Frequenz von 1 Hz bei 25°C.

3. Silikonhydrogel-Kontaktlinse nach Anspruch 1, weiter umfassend eine $O_2$Dk von mehr als etwa 40 Barrer.

4. Silikonhydrogel-Kontaktlinse nach Anspruch 2, weiter umfassend eine $O_2$Dk von mehr als etwa 40 Barrer.

5. Silikonhydrogel-Kontaktlinse nach Anspruch 1, 2, 3 oder 4, weiter umfassend wenigstens 5 Gew.-% eines monoalkylterminierten Polydimethylsiloxans mit der Struktur:
worin b = 0 bis 100; $R_{58}$ eine einwertige Gruppe ist, die eine ethylenisch ungesättigte Einheit umfasst; $R_{59}$ jeweils unabhängig eine einwertige Alkyl- oder Arylgruppe ist, die weiter mit Alkohol-, Amin-, Keton-, Carbonsäure- oder Ethergruppen substituiert sein kann; und $R_{60}$ eine einwertige Alkyl- oder Arylgruppe ist, die weiter mit Alkohol-, Amin-, Keton-, Carbonsäure- oder Ethergruppen substituiert sein kann.

6. Silikonhydrogel-Kontaktlinse nach Anspruch 5, wobei b = 8 bis 10, $R_{58}$ eine einwertige Gruppe ist, die eine Styryl-, Vinyl- oder Methacrylat-Einheit enthält, $R_{59}$ jeweils Methyl ist und $R_{60}$ eine $C_{3-8}$-Alkylgruppe ist.

7. Silikonhydrogel-Kontaktlinse nach Anspruch 5, wobei b = 8 bis 10, $R_{58}$ eine Methacrylat-Einheit ist; $R_{59}$ jeweils Methyl ist; und $R_{60}$ eine Butylgruppe ist.

8. Silikonhydrogel-Kontaktlinse nach Anspruch 5, wobei das monoalkylterminierte Polydimethylsiloxan ein monomethacryloxypropylterminiertes Polydimethylsiloxan ist.

9. Kontaktlinse nach Anspruch 5, wobei die Linsendicke geringer als 85 μm ist.

10. Kontaktlinse nach Anspruch 5, wobei die Dicke geringer als etwa 100 μm ist und der Young'sche Modul geringer als 689.5 kPa (100 psi) ist.

11. Kontaktlinse nach Anspruch 5, wobei die Menge an monoalkylterminiertem Polydimethylsiloxan etwa 20 Gew.-% beträgt.

12. Kontaktlinse nach Anspruch 5, wobei die Dicke geringer als 129 μm und der Young'sche Modul geringer als 413.7 kPa (60 psi) ist.

13. Kontaktlinse nach Anspruch 2, wobei die Menge an monoalkylterminiertem Polydimethylsiloxan etwa 30 Gew.-% beträgt.

## Revendications

1. Lentille de contact en hydrogel de silicone, comprenant une épaisseur centrale (CT) de 50 à 160 µm et un module de Young (E) de 275,8 à 2068 kPa (40 à 300 psi), dans laquelle $(E)(CT)^2$ est inférieur à 6,895 $kPa.mm^2$ (1 $psi.mm^2$).

2. Lentille de contact en hydrogel de silicone selon la revendication 1, comprenant en outre un tan (delta) inférieur à 0,3 à une fréquence de 1 Hz à 25°C.

3. Lentille de contact en hydrogel de silicone selon la revendication 1, comprenant en outre une $O_2Dk$ supérieure à 40 barrers.

4. Hydrogel de silicone selon la revendication 2, comprenant en outre une $O_2Dk$ supérieure à 40 barrers.

5. Lentille de contact en hydrogel de silicone selon la revendication 1, 2, 3 ou 4, comprenant en outre au moins 5 % en poids d'un polydiméthylsiloxane à terminaison monoalkyle ayant la structure :

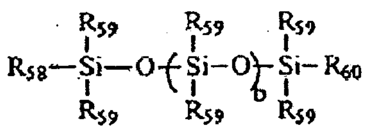

dans laquelle b = 0 à 100 ; $R_{58}$ est un groupe monovalent comprenant une fraction éthyléniquement insaturée ; chaque $R_{59}$ est indépendamment un alkyle monovalent, ou un groupe aryle, qui peut être encore substitué par des groupes alcool, amine, cétone, acide carboxylique ou éther ; et $R_{60}$ est un alkyle monovalent, ou un groupe aryle, qui peut être encore substitué par des groupes alcool, amine, cétone, acide carboxylique ou éther.

6. Lentille de contact en hydrogel de silicone selon la revendication 5, dans lequel b = 8 à 10, $R_{58}$ est un groupe monovalent contenant une fraction styryle, vinyle ou méthacrylate, chaque $R_{59}$ est méthyle et $R_{60}$ est un groupe alkyle en $C_{3-8}$.

7. Lentille de contact en hydrogel de silicone selon la revendication 5, dans lequel b = 8 à 10, $R_{58}$ est une fraction méthacrylate ; chaque $R_{59}$ est méthyle ; et $R_{60}$ est un groupe butyle.

8. Lentille de contact en hydrogel de silicone selon la revendication 5, dans laquelle le polydiméthylsiloxane à terminaison monoalkyle est un polydiméthylsiloxane à terminaison monométhacryloxypropyle.

9. Lentille de contact selon la revendication 5, dans laquelle l'épaisseur de la lentille est inférieure à 85 µm.

10. Lentille de contact selon la revendication 5, dans laquelle l'épaisseur est inférieure à environ 100 µm et le module de Young est inférieur à 689,5 kPa (100 psi).

11. Lentille de contact selon la revendication 5, dans laquelle la quantité de polydiméthylsiloxane à terminaison monoalkyle est d'environ 20 % en poids.

12. Lentille de contact selon la revendication 5, dans laquelle l'épaisseur est inférieure à 129 µm et le module de Young est inférieur à 413,7 kPa (60 psi).

13. Lentille de contact selon la revendication 2, dans laquelle la quantité de polydiméthylsiloxane à terminaison monoalkyle est d'environ 30 % en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4495313 A
- US 4889664 A
- US 5039459 A
- US 4954587 A
- US 5010141 A
- US 5079319 A
- US 5115056 A
- US 5260000 A
- US 5336797 A
- US 5358995 A
- US 5387632 A
- US 5451617 A
- US 5486579 A
- WO 9631792 A
- US 4414372 A
- US 4417034 A
- US 4508880 A
- US 4524196 A
- US 4581428 A
- US 4588795 A
- US 4598161 A
- US 4605716 A
- US 4622372 A
- US 4656233 A
- US 4659782 A
- US 4659783 A
- US 4681918 A
- US 4695607 A
- US 4711942 A
- US 4771116 A
- US 5019634 A
- US 5021524 A
- US 3808178 A
- US 5034461 A
- WO 9110155 A
- JP 61123609 B
- US 6020445 A
- US 5962548 A
- US 5070215 A
- US 4910277 A
- US 3408429 A
- US 3660545 A
- US 4113224 A
- US 4197266 A
- US 4680336 A
- US 3854982 A
- US 3916033 A
- US 4920184 A
- US 5002794 A
- WO 9104283 A
- EP O93810399 A
- US 6087415 A
- US 4640489 A

### Non-patent literature cited in the description

- The Role of Bulky Polysiloxanylalkyl Methacrylates in Polyurethane-Polysiloxane Hydrogels. *J. Appl. Poly. Sci.,* 1996, vol. 60, 1193-1199
- The Role of Bulky Polysiloxanylalkyl Methacrylates in Oxygen-Permeable Hydrogel Materials. *J. Appl. Poly. Sci.,* 1995, vol. 56, 317-324
- Group-Transfer Polymerization. **O.W. Webster.** Encyclopedia of Polymer Science and Engineering Ed. John Wiley & Sons, 1987, 580